# EUROPÄISCHE PATENTSCHRIFT

(11) **EP 1 943 177 B1**
(45) Veröffentlichungstag und Bekanntmachung des Hinweises auf die Patenterteilung: **13.01.2010**
(21) Anmeldenummer: 06804347.0
(22) Anmeldetag: 12.10.2006
(51) Int. Cl.: B66C 23/64, B66F 9/075, B23P 9/04

(54) **KRAN MIT VERSTÄRKUNGSBLECH**
CRANE WITH REINFORCING PLATE
GRUE COMPRENANT UNE PLAQUE DE METAL DE RENFORCEMENT

(30) Priorität: 12.10.2005 AT 6882005
(43) Veröffentlichungstag der Anmeldung: 16.07.2008
(73) Patentinhaber: Palfinger AG, A-5101 Bergheim (AT)
(72) Erfinder: HABERL, Walter, A-5152 Michaelbeuern (AT)
(74) Vertreter: Hofinger, Stephan
(86) Internationale Anmeldenummer: PCT/AT2006/000419
(87) Internationale Veröffentlichungsnummer: WO 2007/041739

(56) Entgegenhaltungen:
- EP-A2- 1 387 012
- CH-A- 392 811
- DE-A1- 4 327 096
- FR-A- 2 195 277
- JP-A- 4 021 717
- US-A1- 2004 244 882
- US-A1- 2004 250 584
- US-A1- 2005 092 397

## Beschreibung

Die vorliegende Erfindung betrifft einen Kran, insbesondere einen auf Lastkraftwagen mitführbaren Ladekran, der in mindestens einer hochbelasteten Zone mit einem Verstärkungsblech versehen ist, das auf das entsprechende Kranbauteil aufgeschweißt ist sowie ein Verfahren zur Behandlung einer Schweißnaht, mittels derer ein Verstärkungsblech auf ein Kranbauteil aufgeschweißt ist.

Kräne werden in hochbelasteten Zonen häufig mit Verstärkungsblechen versehen, um die dort auftretenden Belastungsspitzen aufzunehmen und eine ausreichende Stabilität des entsprechenden Kranbauteils zu gewährleisten. Beim Aufschweißen von Verstärkungsblechen muss jedoch darauf geachtet werden, dass nicht die Schweißnaht eine Schwachstelle bildet, von der ausgehend Risse entstehen, die wiederum zum Versagen des Bauteils führen. Wesentlich ist dabei zunächst eine entsprechende Formgebung des Verstärkungsblechs. Einen gattungsgemäßen Kran offenbart beispielsweise die CH 392 811 A. Aufgabe der vorliegenden Erfindung ist es, einen Kran bereit zu stellen, bei dem eine höhere Ermüdungsfestigkeit gegeben ist.

Ergänzend dazu ist erfindungsgemäß vorgesehen, dass die Schweißnaht und der an die Schweißnaht angrenzende Bereich des Verstärkungsblechs zumindest abschnittsweise geschliffen und kaltverformt, insbesondere durch Hämmern oder Nadeln kaltverformt sind, wobei spitz auslaufende Abschnitte des Verstärkungsblechs, an denen Spannungsspitzen auftreten, geschliffen sind.

Analog dazu sieht das erfindungsgemäße Verfahren vor, dass die Schweißnaht und der an die Schweißnaht angrenzende Bereich des Verstärkungsblechs zumindest abschnittsweise geschliffen und anschließend kaltverformt wird, wobei spitz auslaufende Abschnitte des Verstärkungsblechs, an denen Spannungsspitzen auftreten, geschliffen sind.

Durch die Kombination von Schleifbehandlung und Kaltverformung wird eine bisher nicht erreichte Ermüdungsfestigkeit erzielt,

Bei der Kaltverformung hat sich das Hämmern oder Nadeln mit Ultraschallfrequenz bewährt, wobei diese Verfahren in der Fachsprache unter "ultrasonic impact treatment" (UIT) zusammengefasst werden.

Weitere Merkmale und Einzelheiten der vorliegenden Erfindung ergeben sich aus der nachfolgenden Figurenbeschreibung. Dabei zeigt:
- Fig. 1:: eine Kransäule mit aufgeschweißtem Verstärkungsblech,
- Fig. 2:: das Detail A in Fig. 1 in Vergrößerung,
- Fig. 3a:: eine Seitenansicht des Kranbauteils mit aufgeschweißtem Verstärkungsblech und
- Fig. 3b:: die entsprechende Ansicht von oben, beides vor eine Nachbehandlung,
- Fig. 4a:: eine der Fig. 3a entsprechende Seitenansicht nach dem Schleifen,
- Fig. 4b:: eine der Fig. 3b entsprechende Ansicht von oben nach dem Schleifen,
- Fig. 5a:: eine den Fig. 3a und 4a entsprechende Seitenansicht nach der Kaltverformung und
- Fig. 5b:: eine den Fig. 3b und 4b entsprechende Ansicht von oben nach der Kaltverformung.

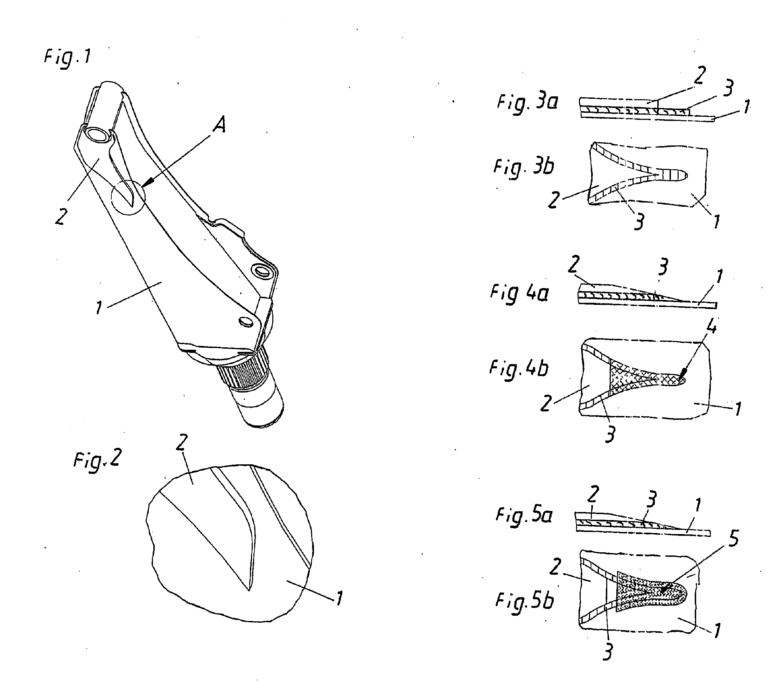

Fig. 1 zeigt als beispielhaft herausgegriffenes Kranbauteil 1 eine Kransäule, die an ihrem oberen Ende mit einem Verstärkungsblech 2 versehen ist, das aufgeschweißt ist. Hochbelastete Zonen, die das Aufschweißen von Verstärkungsblechen notwendig und sinnvoll erscheinen lassen, finden jedoch ebenso gut auf dem Knickarm oder Schwenkarm eines Krans.

Fig. 2 zeigt in Vergrößerung das am Kranbauteil 1 anliegende Verstärkungsblech 2, wobei die Schweißnaht 3, mit der das Verstärkungsblech 2 umlaufend mit dem Kranbauteil 1 verschweißt ist, noch fehlt.

Dargestellt ist diese Schweißnaht 3 in den Fig. 3a und 3b, deren Ausschnitte das spitz zulaufende Ende des Verstärkungsblechs 2 zeigen. Eingesetzt wird hauptsächlich MAG-Schweißen, wobei allerdings auch jedes andere Schweißverfahren vorstellbar ist.

Wesentlich ist die anschließende Schleifbehandlung, bei der zumindest der spitz zulaufende Abschnitt des Verstärkungsblechs 2 sowie die angrenzende Schweißnaht 3 geschliffen werden. Durch den Schleifvorgang wird ein harmonischer Übergang ohne Kerben erzielt. Das Schleifmittel ist dabei so zu wählen, dass keine tiefgehenden Schleifspuren verbleiben. Die Schleifzone ist in Fig. 4b schraffiert und mit dem Bezugszeichen 4 gekennzeichnet.

Letzter Verfahrensschritt ist das Kaltverformen, insbesondere durch "ultrasonic impact treatment" (UIT). Durch Nadeln oder Hämmern mit Ultraschallfrequenz werden dabei das Verstärkungsblech 2, die Schweißnaht 3 sowie vorzugsweise der angrenzende Bereich des Kranbauteils 1 kaltverformt. Die kaltverformte Zone ist schraffiert eingezeichnet und mit dem Bezugszeichen 5 versehen.

Anstelle des Nadelns oder Hämmerns kann analog dem Sandstrahlen ein Kugelstrahlen, beispielsweise mit Stahlkugeln von etwa 2 mm Durchmesser erfolgen

Durch die beim Kaltverformen bewirkte Oberflächenverdichtung erfolgt eine Umwandlung der beim Schweißen entstehenden Zugeigenspannung ("Schrumpfspannung") in Druckspannung. Dabei werden Druckeigenspannungen sowohl in der Schweißnaht, als auch in den angrenzenden Werkstückbereichen eingebracht.

Die durchschnittliche Eindringtiefe der eingebrachten Druckspannung liegt zwischen 0,7 und 1,3 mm. Das dabei auftretende Druckspannungsmaximum liegt bei ca. 50 % der Streckgrenze der eingesetzten Stahlqualität.

Durch diese eingebrachte Druckeigenspannung wird speziell in zug- und biegezugbeanspruchten Bereichen einerseits bei gleichbleibender Spannungsamplitude die ertragbare Lastspielzahl wesentlich erhöht oder vice versa bei gleicher Lastspielzahl die ertragbare Spannungsamplitude erhöht.

## Patentansprüche

1. Kran, insbesondere auf Lastkraftwagen mitführbarer Ladekran, der in mindestens einer hochbelasteten Zone mit einem Verstärkungsblech (2) versehen ist, das auf das entsprechende Kranbauteil (1) aufgeschweißt ist, **dadurch gekennzeichnet, dass** die Schweißnaht (3) und der an die Schweißnaht (3) angrenzende Bereich des Verstärkungsblechs (2) zumindest abschnittsweise geschliffen und kaltverformt, insbesondere durch Hämmern oder Nadeln kaltverformt sind, wobei spitz auslaufende Abschnitte des Verstärkungsblechs (2) geschliffen sind.

2. Kran nach Anspruch 1, **dadurch gekennzeichnet, dass** die Kaltverformung sich auch auf den an die Schweißnaht (3) angrenzenden Bereich des Kranbauteils (1) erstreckt.

3. Verfahren zur Behandlung einer Schweißnaht (3) mittels derer ein Verstärkungsblech (2) auf ein Kranbauteil (1) aufgeschweißt ist, **dadurch gekennzeichnet, dass** die Schweißnaht (3) und der an die Schweißnaht (3) angrenzende Bereich des Verstärkungsblechs (2) zumindest abschnittsweise geschliffen und anschließend kaltverformt wird, wobei spitz auslaufende Abschnitte des Verstärkungsblechs (2) geschliffen sind.

4. Verfahren nach Anspruch 3, **dadurch gekennzeichnet, dass** die Kaltverformung durch Hämmern oder Nadeln erfolgt.

5. Verfahren nach Anspruch 4, **dadurch gekennzeichnet, dass** das Hämmern oder Nadeln mit Ultraschallfrequenz durchgeführt wird.

6. Verfahren nach Anspruch 3, **dadurch gekennzeichnet, dass** die Kaltverformung durch Kugelstrahlen erfolgt.

7. Verfahren nach einem der Ansprüche 3 bis 6, **dadurch gekennzeichnet, dass** die Kaltverformung auch an den das Verstärkungsblech angrenzenden Bereich des Kranbauteiles erfasst.

8. Verfahren nach einem der Ansprüche 3 bis 7, **dadurch gekennzeichnet, dass** die Kaltverformung fortgesetzt wird, bis in der Schweißnaht bis zu einer Tiefe von mindestens 0,5 mm eine Druckspannung von mindestens 10 % der Streckgrenze des eingesetzten Stahles herrscht.

## Claims

1. A crane, in particular a loading crane which can be carried along on lorries, provided in at least one area subjected to high loads with a reinforcing plate (2) which is welded onto the corresponding crane part (1), **characterised in that** the weld seam and region of the reinforcing plate (2) adjacent to the weld seam (3) are, at least in part, ground and cold-formed, in particular by hammering or needling, wherein sections of the reinforcing plate (2) which taper to a point are ground.

2. A crane according to Claim 1, **characterised in that** the cold-forming extends to the region of the crane part (1) which is adjacent to the weld seam (3).

3. A method of treating a weld seam by means of which a reinforcing plate is welded onto a crane part, **characterised in that** the weld seam and the region of the reinforcing plate adjacent to the weld seam are, at least in part, ground and then cold-formed, wherein sections of the reinforcing plate (2) which taper to a point are ground.

4. A method according to Claim 3, **characterised in that** the cold-forming is carried out by hammering or needling.

5. A method according to Claim 4, **characterised in that** the hammering or needling is performed with ultrasound frequency.

6. A method according to Claim 3 to 5, **characterised in that** the cold-forming is effected by shot blasting.

7. A method according to one of Claims 3 to 6, **characterised in that** the cold-forming also includes the region of the crane part which is adjacent to the reinforcing plate.

8. A method according to one of Claims 3 to 7, **characterised in that** the cold-forming continues until the compressive strength which prevails in the weld seam to a depth of at least 0.5 mm is at least 10% of the yield point of the steel being used.

## Revendications

1. Grue, en particulier grue transportable de chargement sur poids lourd, qui est, au moins dans une zone fortement chargée, munie d'une plaque de métal de renforcement (2) qui est soudée sur l'élément de construction de grue (1) correspondant, **caractérisée en ce que** le cordon de soudure (3) et la zone de la plaque de métal de renforcement (2) jouxtant le cordon de soudure (3) sont, au moins par tronçons, meulés et formés à froid, en particulier formés à froid par martelage ou par aiguilletage, les tronçons de la plaque de métal de renforcement (2) se terminant en pointe étant meulés.

2. Grue selon la revendication 1, **caractérisée en ce que** le formage à froid s'étend également à la zone de l'élément de construction de grue (1) qui jouxte le cordon de soudure (3).

3. Procédé de traitement d'un cordon de soudure (3) au moyen desquels une plaque de métal de renforcement (2) est soudée sur un élément de construction de grue (1), **caractérisé en ce que** le cordon de soudure (3) et la zone de la plaque de métal de renforcement (2) jouxtant le cordon de soudure (3) sont, au moins par tronçons, meulés et puis formés à froid, les tronçons de la plaque de métal de renforcement (2) se terminant en pointe étant meulés.

4. Procédé selon la revendication 3, **caractérisé en ce que** le formage à froid est effectué par martelage ou par aiguilletage.

5. Procédé selon la revendication 4, **caractérisé en ce que** le martelage ou l'aiguilletage est effectué avec une fréquence ultrasonore.

6. Procédé selon la revendication 3, **caractérisé en ce que** le formage à froid est effectué par grenaillage.

7. Procédé selon une des revendications 3 à 6, **caractérisé en ce que** le formage à froid englobe également la zone jouxtant la plaque de métal de renforcement.

8. Procédé selon une des revendications 3 à 7, **caractérisé en ce que** le formage à froid est poursuivi jusqu'à ce que, dans le cordon de soudure, il règne, jusqu'à une profondeur d'au moins 0,5 mm, une tension de compression d'au moins 10 % de la limite d'élasticité de l'acier utilisé.
